# EUROPEAN PATENT SPECIFICATION

(11) **EP 1 195 322 B1**
(45) Date of publication and mention of the grant of the patent: **05.11.2008**
(21) Application number: 00944251.8
(22) Date of filing: 05.07.2000
(51) Int. Cl.: B65B 9/10, B65B 51/26, B65B 57/02

(54) **FILLING MACHINE**
FÜLLMASCHINE
REMPLISSEUSE

(30) Priority: 07.07.1999 JP 19319499; 01.06.2000 JP 2000164121
(43) Date of publication of application: 10.04.2002
(60) Divisional application: 08001835.1
(73) Proprietor: Tetra Laval Holdings & Finance SA, 1009 Pully (CH)
(72) Inventor: Kinoshita, Shigehiro Nihon Tetra Pak K.K., Tokyo 102-8544 (JP); Yamazaki, Takeo Nihon Tetra Pak K.K., Tokyo 102-8544 (JP); Otsuka, Yuzo Nihon Tetra Pak K.K., Tokyo 102-8544 (JP); Nishimura, Hiroyuki Nihon Tetra Pak K.K., Tokyo 102-8544 (JP)
(74) Representative: Müller, Frank Peter
(86) International application number: PCT/JP2000/004454
(87) International publication number: WO 2001/004005

(56) References cited:
- EP-A- 0 902 275
- DE-A1- 2 706 671
- DE-A1- 19 516 871
- JP-A- 8 337 219
- JP-A- 54 126 192
- JP-U- 61 062 018
- US-A- 3 680 446

## Description

### TECHNICAL FIELD

The present invention relates to a filling apparatus.

### BACKGROUND ART

Conventionally, in a filling apparatus for producing packaging containers filled with liquid food, such as milk or soft drink, a weblike packaging material is continuously formed into a tubular shape, while being transported, and then the tubular portion of the packaging material is filled with liquid food to thereby produce packaging containers.

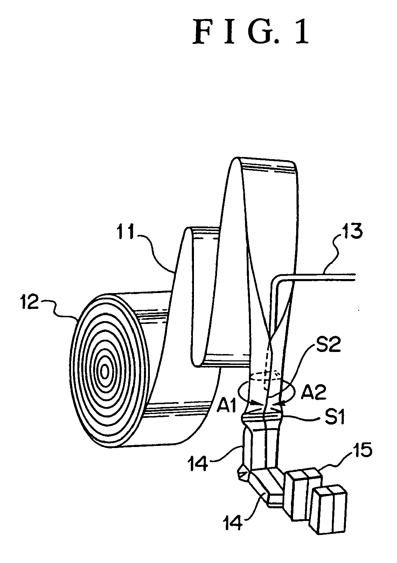

FIG. 1 is a conceptual view of a conventional filling apparatus.

In FIG. 1, reference numeral 11 denotes a packaging material. The packaging material 11 in the form of a reel 12 is loaded into the filling apparatus. The packaging material 11 is fed into the filling apparatus by means of an unillustrated feeder and is transported in a weblike form within the filling apparatus.

Subsequently, while being guided, the weblike packaging material 11 is gradually curved into a tubular shape by means of an unillustrated forming ring and other components. The thus-formed tubular portion of the packaging material 11 is longitudinally sealed by means of an unillustrated longitudinal sealing apparatus, to thereby become a packaging material tube. While being transported downward, the packaging material tube is filled with liquid food supplied from above via a filling pipe 13. Next, while being nipped from both sides, the packaging material tube is laterally sealed at predetermined intervals by means of an unillustrated lateral sealing apparatus, thereby forming prototype containers 14 each assuming the form of, for example, a pillow or a bag.

Subsequently, an unillustrated cutting apparatus cuts the packaging material tube at laterally extending seal portions; i.e., at lateral seal portions S1, thereby separating the prototype containers 14 from one another. An unillustrated forming apparatus forms each of the prototype containers 14 into a predetermined shape through bending along creases formed beforehand, thereby completing a packaging container 15.

Since the packaging material tube has a substantially circular cross section, the transported packaging material tube raises difficulty in positioning. For example, when, upon reception of a force from the forming ring, the packaging material tube moves circularly in the direction of arrow A1 or A2, a longitudinally extending seal portion; i.e., an overlap portion S2, deviates from a predetermined position. When the prototype container 14 is formed into a predetermined shape to thereby complete a packaging container 15 while the overlap portion S2 is deviated from the predetermined position, creases formed beforehand on the packaging material 11 fail to positionally coincide with actual creases, resulting in a poor appearance of the packaging container 15.

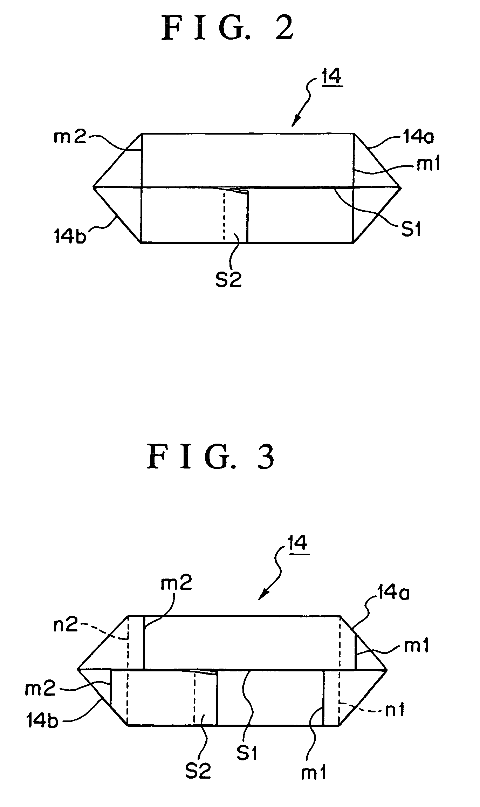

FIG. 2 is a plan view of a prototype container formed with an overlap portion located at a predetermined position. FIG. 3 is a plan view of a prototype container formed with an overlap portion deviated from a predetermined position.

In FIGS. 2 and 3, reference numeral 14 denotes a prototype container; reference numerals 14a and 14b denote lugs; reference numeral S1 denotes a lateral seal portion; reference numeral S2 denotes an overlap portion; and reference numerals m1 and m2 denote creases formed beforehand on the packaging material 11 (FIG. 1) and adapted to bend the lugs 14a and 14b along the same. As shown in FIG. 2, when the prototype container 14 is formed while the overlap portion S2 is located at a predetermined position, the creases m1 and m2 each assume the form of a straight line. Thus, the lugs 14a and 14b can be bent along the creases m1 and m2.

However, as shown in FIG. 3, when the prototype container 14 is formed while the overlap portion S2 is deviated from a predetermined position, the creases m1 and m2 fail to assume the form of straight lines. As a result, the lugs 14a and 14b fail to be bent along the creases m1 and m2; i.e., the lugs 14a and 14b are bent along creases n1 and n2.

In order to cope with the above-described problem, a paper guide is disposed along an unillustrated transport path on which the weblike packaging material 11 travels. The paper guide is pressed against an edge portion of the packaging material 11 so as to move the packaging material 11 perpendicular to the direction of transport, thereby adjusting the position of the overlap portion S2 to a predetermined position.

However, in the conventional filling apparatus, the paper guide must be pressed against an edge portion of the packaging material 11, and consequently the edge portion is damaged.

The packaging material 11 is formed through longitudinally cutting an unillustrated wide original web at a plurality of positions. When variations in the width of the packaging material 11 arise due to positional cutting error, even the positional adjustment of the overlap portion S2 fails to establish the positional coincidence between the creases m1 and m2 and the creases n1 and n2.

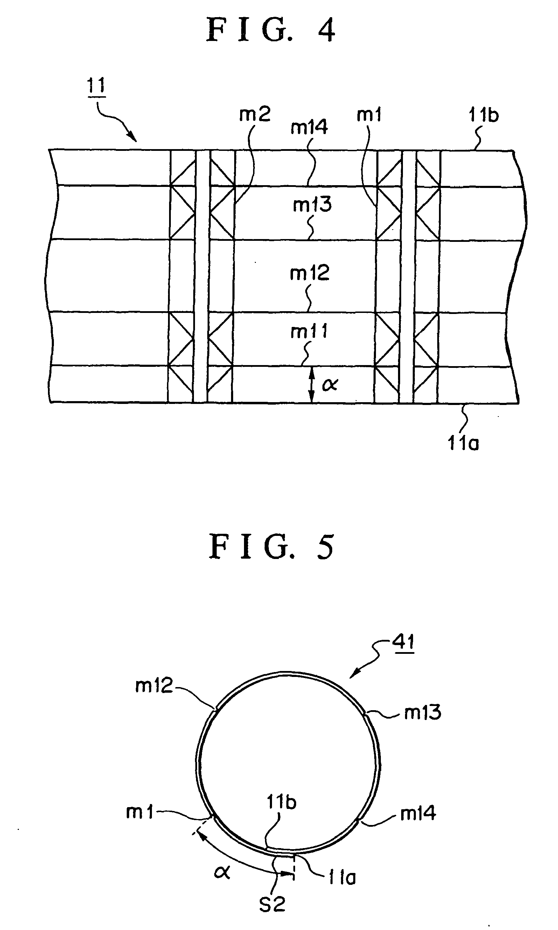

FIG. 4 is a development of a packaging material. FIG. 5 is a sectional view of a packaging material tube.

In FIGS. 4 and 5, reference numeral 11 denotes a packaging material; reference numerals 11a and 11b denote edge portions of the packaging material 11; reference numerals m1 and m2 denote creases formed laterally beforehand on the packaging material 11; and reference numerals m11 to m14 denote creases formed longitudinally beforehand on the packaging material 11. When no positional cutting error is involved, the width of the packaging material 11 is stabilized. However, when a positional cutting error is involved, variations in the width of the packaging material 11 arise.

As a result, a distance α between the edge portion 11a and the crease m11 varies. Even when the position of the overlap portion S2 is adjusted in the course of formation of a packaging material tube 41 shown in FIG. 5, the creases m1 and m2 fail to coincide with the creases n1 and n2 (FIG. 3), resulting in a poor appearance of the packaging container 15 (FIG. 1).
As a further example, JP 08-337219 A discloses a manufacturing apparatus for manufacturing a cylindrical film free from twisting by preventing the film from laterally shifting, wherein a long film is transferred and an overlap is formed with both ends gathered, and wherein the apparatus including sensing means for sensing a shift in a peripheral direction of the film from a predetermined position and a position control means for receiving a sensing signal from these sensing means to move the film in a peripheral direction and control, so that the overlap is at a predetermined position.

An object of the present invention is to solve the above-described problems in the conventional filling apparatus and to provide a filling apparatus capable of establishing the positional coincidence between creases formed beforehand on a packaging material and actual creases to thereby improve the appearance of a packaging container.

### DISCLOSURE OF THE INVENTION

To achieve the above object, a filling apparatus of the present invention comprises a light source for irradiating, with light, a portion of the outer circumferential surface of a packaging material tube having an overlap portion, the portion including at least the overlap portion; light detection means for issuing a sensor output upon reception of light emitted from the light source and reflected from the outer circumferential surface of the packaging material tube; and overlap portion detection processing means for detecting the overlap portion by means of a peak in the sensor output.

In this case, regarding light reflected from the outer circumferential surface of the packaging material tube, light reflected from an end portion of the packaging material exhibits great intensity and causes emergence of a peak in a sensor output from the light detection means. Accordingly, a portion of the packaging material tube which causes emergence of a peak in the sensor output can be detected as an overlap portion.

Since light reflected from the end portion of the packaging material is greater in intensity than light reflected from other portions of the packaging material, the facing design of a packaging container does not cause noise. Thus, the overlap portion can be detected at high accuracy.

When a prototype container is formed into a predetermined shape to thereby complete a packaging container, a user can judge from the position of the overlap portion whether or not forming has been performed properly. Thus, sampling a packaging container from a production line becomes unnecessary, thereby simplifying the work of judging whether or not forming has been performed properly, and thus reducing the cost of production of a packaging container. Also, all packaging containers can be checked so as to see whether or not they have been formed properly.

Mere digitization of a sensor output from the light detection means suffices, without need to process data regarding a taken image, thereby reducing the cost of manufacture of a filling apparatus. Since there is no need to employ a contactor to be brought in direct contact with the packaging material, the overlap portion can be detected at high accuracy

Another filling apparatus further comprises packaging material tube formation means for forming a packaging material tube through curving a weblike packaging material; a guide roller rotatably disposed upstream of the packaging material tube formation means with respect to the transport direction of the packaging material and adapted to guide the packaging material; overlap portion detection processing means for detecting an overlap portion of the packaging material tube; and centering processing means for moving one end of the guide roller on the basis of the result of detection by the overlap portion detection processing means.

In this case, the overlap portion detection processing means detects the overlap portion of the packaging material tube. On the basis of the result of detection by the overlap portion detection processing means, one end of the guide roller is moved.

Since the position of an edge portion of the packaging material is varied, the overlap portion can be moved accordingly. That is, the position of the overlap portion can be adjusted such that the overlap portion comes to a predetermined position.

Also, creases formed beforehand on the packaging material can positionally coincide with actual creases, thereby improving the appearance of a packaging container.

Still another filling apparatus further comprises packaging material tube formation means for forming a packaging material tube through curving a weblike packaging material; a guide roller rotatably disposed upstream of the packaging material tube formation means with respect to the transport direction of the packaging material and adapted to guide the packaging material; a support mechanism for movably supporting one end of the guide roller; and a fulcrum mechanism for pivotably supporting the other end of the guide roller.

In this case, when one end of the guide roller is moved, the packaging material is caused to move axially on the surface of the guide roller according to the amount of movement of one end of the guide roller while being guided on the guide roller; i.e., the packaging material can be moved perpendicular to the transport direction of the packaging material. Since the opposite edge positions of the packaging material to be curved by the packaging material tube formation means are varied, the overlap portion can be moved accordingly; i.e., the position of the overlap portion can be adjusted.

The positional adjustment of the overlap portion does not involve pressing of paper guides against edge portions of the packaging material, whereby potential damage to the edge portions of the packaging material is avoided.

Yet another filling apparatus is such that one end of the guide roller is moved along a direction parallel with a transport plane of the packaging material which is about to reach the guide roller.

In this case, since one end of the guide roller is moved along a direction parallel with a transport plane of the packaging material which is about to reach the guide roller, a great change in the transport state of the packaging material can be prevented.

Still another filling apparatus is such that one end of the guide roller is removably disposed in the support mechanism.

In this case, since one end of the guide roller is removably disposed, the work of loading the filling apparatus with the packaging material can be simplified.

### BRIEF DESCRIPTION OF DRAWINGS

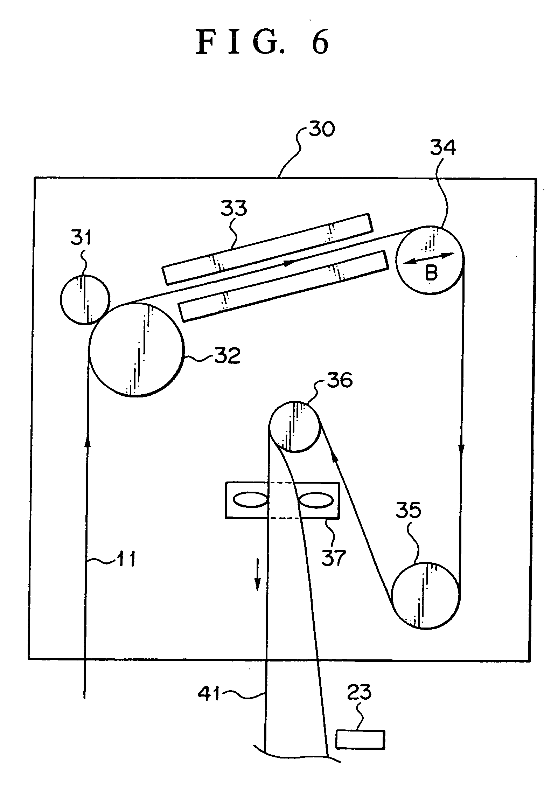

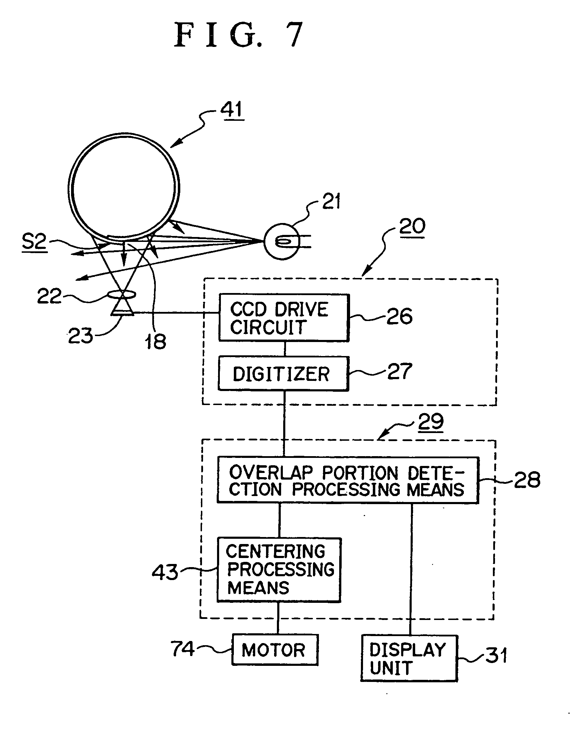

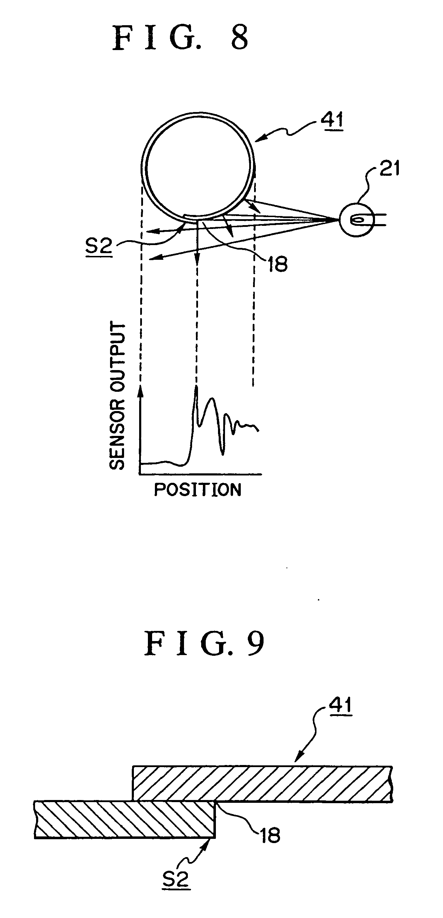

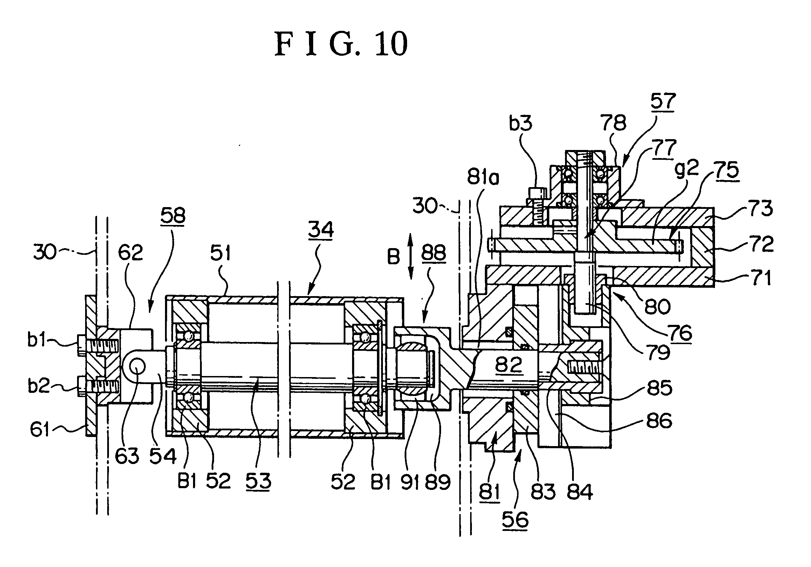

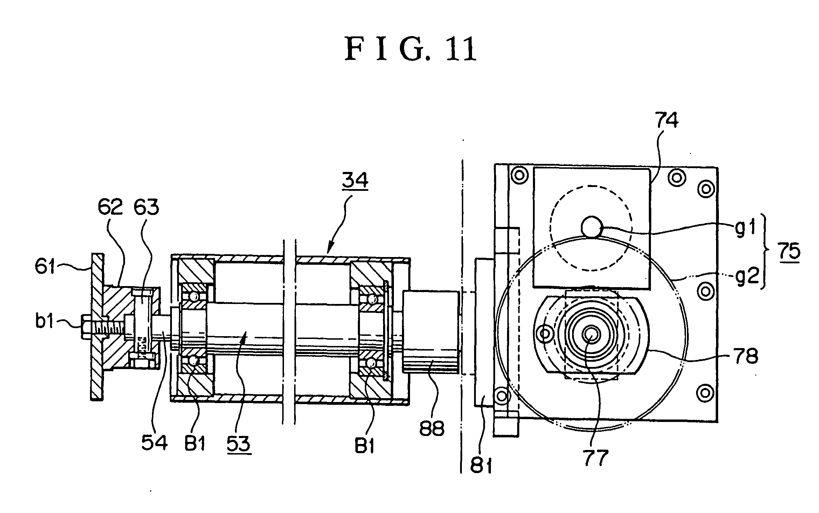

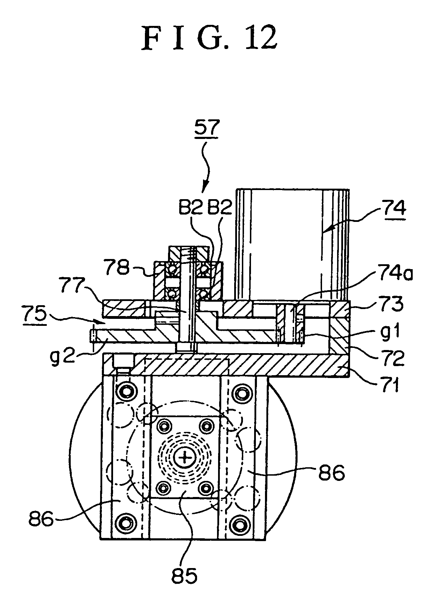

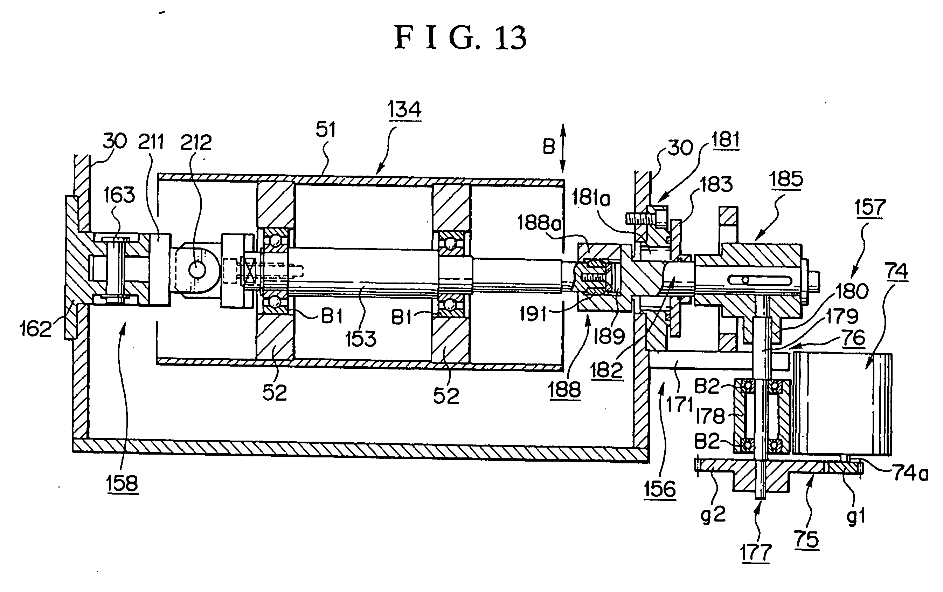

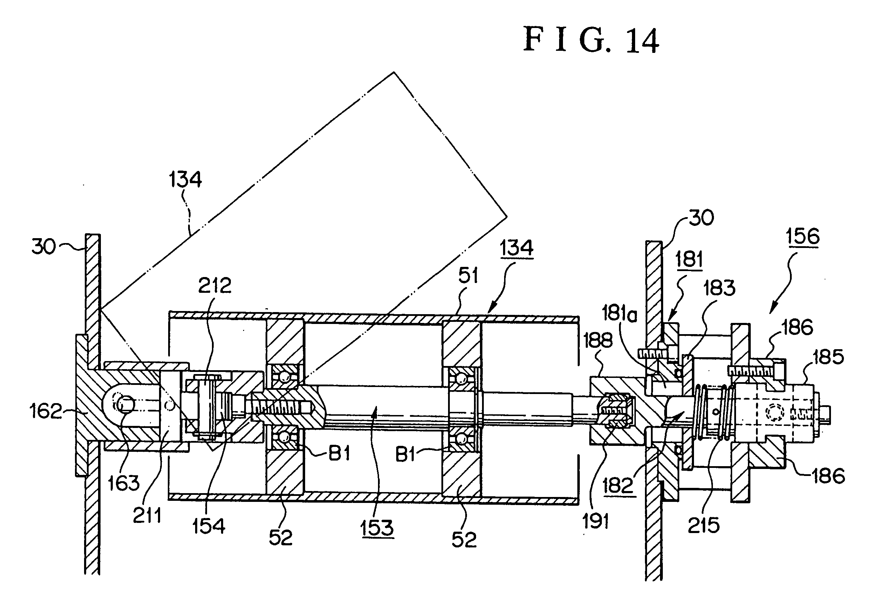

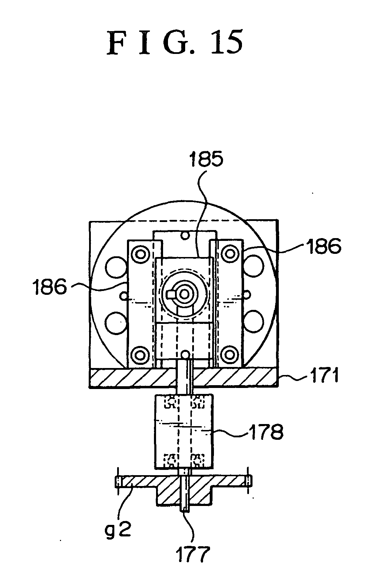

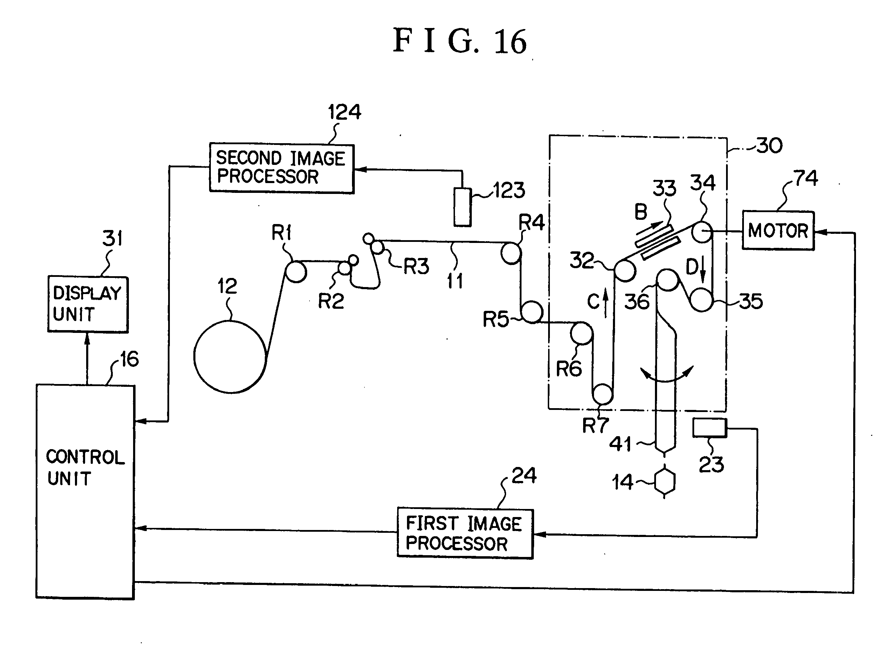

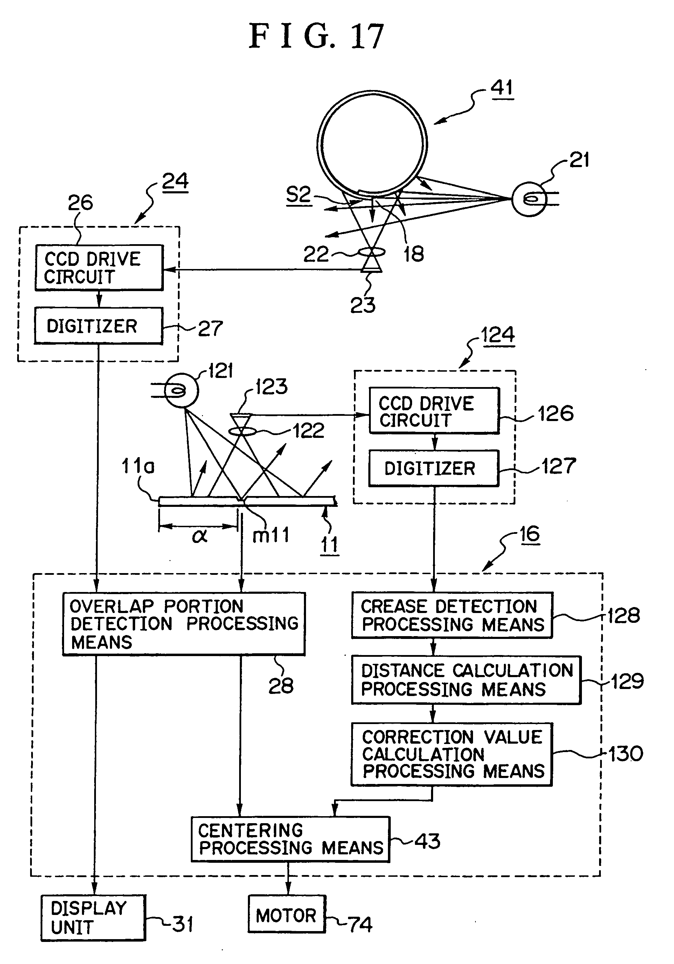

FIG. 1 is a conceptual view of a conventional filling apparatus; FIG. 2 is a plan view of a prototype container formed with an overlap portion located at a predetermined position; FIG. 3 is a plan view of a prototype container formed with an overlap portion deviated from a predetermined position; FIG. 4 is a development of a packaging material; FIG. 5 is a sectional view of a packaging material tube; FIG. 6 is a conceptual view showing a main portion of a filling apparatus according to a first embodiment of the present invention; FIG. 7 is a control block diagram of an overlap portion adjustment apparatus in the first embodiment of the present invention; FIG. 8 is a view explaining a sensor output from a CCD in the first embodiment of the present invention; FIG. 9 is an enlarged view showing a main portion of a packaging material tube in the first embodiment of the present invention; FIG. 10 is a front view showing a guide roller support mechanism in the first embodiment of the present invention; FIG. 11 is a plan view showing the guide roller support mechanism in the first embodiment of the present invention; FIG. 12 is a side view showing the guide roller support mechanism in the first embodiment of the present invention; FIG. 13 is a front view showing a guide roller support mechanism in a second embodiment of the present invention; FIG. 14 is a plan view showing the guide roller support mechanism in the second embodiment of the present invention; FIG. 15 is a side view showing the guide roller support mechanism in the second embodiment of the present invention; FIG. 16 is a conceptual diagram of a filling apparatus according to a third embodiment of the present invention; and FIG. 17 is a control block diagram of an overlap portion adjustment apparatus in the third embodiment of the present invention.

### BEST MODE FOR CARRYING OUT THE INVENTION

The embodiments of the present invention will next be described in detail with reference to the drawings.

FIG. 6 is a conceptual view showing a main portion of a filling apparatus according to a first embodiment of the present invention; FIG. 7 is a control block diagram of an overlap portion adjustment apparatus in the first embodiment of the present invention; FIG. 8 is a view explaining a sensor output from a CCD in the first embodiment of the present invention; and FIG. 9 is an enlarged view showing a main portion of a packaging material tube in the first embodiment of the present invention.

In FIG. 6, reference numeral 11 denotes a packaging material and reference numeral 30 denotes an aseptic room disposed at a predetermined position of the filling apparatus. The packaging material 11 in the form of a reel 12 (see FIG. 1) is loaded onto the filling apparatus and fed by means of an unillustrated feeder to thereby travel in a weblike form within the filling apparatus. In this case, as shown in FIG. 6, the packaging material 11 is transported upward as indicated by the arrow. The packaging material 11 fed into the aseptic room 30 is held between feed rollers 31 and 32 and transported obliquely upward to an air knife unit 33. Subsequently, the packaging material 11 is transported obliquely upward within the air knife unit 33. In the course of transport within the air knife unit 33, hot air discharged from unillustrated nozzles removes a germicide and the like adhering to the packaging material 11.

The packaging material 11 exiting from the air knife unit 33 is transported to a first guide roller 34. Being guided by the first guide roller 34, the packaging material 11 is transported downward to a second guide roller 35. Being guided by the second guide roller 35, the packaging material 11 is transported obliquely upward to a third guide roller 36. Being guided by the third guide roller 36, the packaging material 11 is transported downward. While being guided by a forming ring 37 and other components, which collectively serve as the packaging material tube formation means, the packaging material 11 is gradually curved into the shape of a tube. An unillustrated longitudinal sealing apparatus longitudinally seals the tubular portion of the packaging material 11 into a packaging material tube 41. While being transported downward, the packaging material tube 41 is filled with liquid food supplied from above via a filling pipe 13. The first to third guide rollers 34-36 are located upstream of the forming ring 37 with respect to the transport direction of the packaging material 11 and are operative to guide the packaging material 11.

Subsequently, the packaging material tube 41 exits from the aseptic room 30 and is transported to an unillustrated lateral sealing apparatus. In the lateral sealing apparatus, while being nipped from both sides, the packaging material tube 41 is laterally sealed at predetermined intervals, whereby lateral seal portions S1 are formed. Subsequently, an unillustrated cutting apparatus cuts the packaging material tube 41 at the lateral seal portions S1, thereby separating prototype containers 14 each assuming the form of, for example, a pillow or a bag, from one another.

Since the packaging material tube 41 has a substantially circular cross section, the transported packaging material tube 41 raises difficulty in positioning. For example, when, upon reception of a force from the forming ring 37, the packaging material tube 41 moves circularly, an overlap portion S2 deviates from a predetermined position. When the prototype container 14 is formed into a predetermined shape to thereby complete a packaging container 15 while the overlap portion S2 is deviated from the predetermined position, creases m1 and m2 (see FIG. 3) formed beforehand on the packaging material 11 fail to positionally coincide with actual creases n1 and n2, resulting in a poor appearance of the packaging container 15.

In order to cope with the above-described problem, a CCD 23 serving as the light detection means is disposed outside the aseptic room 30 in the vicinity of an outlet for the packaging material tube 41. On the basis of a sensor output from the CCD 23, the overlap portion S2 is detected. On the basis of the result of detection of the overlap portion S2, one end of the first guide roller 34 is moved in the direction of arrow B so as to move the overlap portion S2 to a predetermined position.

In this case, the direction of arrow B is the direction along which the packaging material 11 is transported between the feed rollers 31 and 32 and the first guide roller 34; i.e., the direction of arrow B is a direction parallel with a transport plane of the packaging material 11 which is about to reach the first guide roller 34. Since one end of the first guide roller 34 is moved in the direction along which the packaging material 11 is transported to the first guide roller 34, a great change in the transport state of the packaging material 11 can be prevented.

According to the present embodiment, one end of the first guide roller 34 is moved. However, one end of the second guide roller 35 may be moved, or one end of the first guide roller 34 and one end of the second guide roller 35 may be moved. When one end of the second guide roller 35 is to be moved, one end of the second guide roller 35 is moved in the direction along which the packaging material 11 is transported between the first guide roller 34 and the second guide roller 35; i.e., along a direction parallel with a transport plane of the packaging material 11 which is about to reach the second guide roller 35.

Next will be described the overlap portion adjustment apparatus for locating the overlap portion S2 at a predetermined position.

In FIG. 7, reference numeral 41 denotes a packaging material tube. Since opposite edges of the packaging material tube 41 are superposed on each other at the overlap portion S2, a step is formed on the outer circumferential surface of the packaging material tube 41. Reference numeral 21 denotes a light source. The light source 21 irradiates, with light, a portion of the outer circumferential surface of the packaging material tube 41 which includes at least the overlap portion S2. Thus, the light source 21 is disposed on a tangent to the packaging material tube 41 at the overlap portion S2 a predetermined distance away from the overlap portion S2 in such a manner as to face an end face 18 of the overlap portion S2. Reference numeral 22 denotes a lens serving as a condensing member. The lens 22 is disposed on a line that passes through the center of the packaging material tube 41 and the end face 18, radially outward from the overlap portion S2. The lens 22 gathers light emitted from the light source 21 and reflected from the outer circumferential surface of the packaging material tube 41.

Reference numeral 23 denotes a CCD. The CCD 23 is disposed on a line that passes through the center of the packaging material tube 41 and the end face 18, at a predetermined position radially outward from the overlap portion S2 and the lens 22, as well as on the optical axis of the lens 22. The CCD 23 receives light gathered by the lens 22 and issues a sensor output (see FIG.8). The CCD 23 may be a one-dimensional line sensor or a two-dimensional plane sensor. The lens 22 and the CCD 23 constitute first image pickup means.

In this case, when the light source 21 irradiates the packaging material tube 41 with light, regarding light reflected from the outer circumferential surface of the packaging material tube 41, light reflected from the end face 18 exhibits great intensity and causes emergence of a peak in a sensor output from the CCD 23. Accordingly, the overlap portion S2 can be detected by means of a peak in the sensor output. In this case, since light reflected from the end face 18 is greater in intensity than light reflected from other portions of the packaging material tube 41, the facing design of the packaging container 15 does not cause noise.

Reference numeral 20 denotes an image processor. The image processor 20 includes a CCD drive circuit 26 and a digitizer 27. The CCD drive circuit 26 drives the CCD 23. A sensor output from the CCD 23 is sent to the digitizer 27 via the CCD drive circuit 26 and digitized at the digitizer 27. In the present embodiment, a comparator can be used as the digitizer 27. The comparator compares the sensor output with a predetermined reference value and outputs 1 or 0. An output from the digitizer 27 is sent to a control unit 29.

The control unit 29 includes overlap portion detection processing means 28 and centering processing means 43. Upon reception of an output from the digitizer 27, the overlap portion detection processing means 28 detects a peak in the sensor output on the basis of the digitizer output to thereby detect the overlap portion S2. The overlap portion detection processing means 28 sends, as a detection signal, detection data indicative of the detection of the overlap portion S2 to a display unit 31, such as a display. The display unit 31 displays the position of the overlap portion S2 on the basis of the detection data.

The detection data is sent to the centering processing means 43. On the basis of the detection data, the centering processing means 43 drives a motor 74 serving as drive means to thereby move one end of the first guide roller 34.

Since the position of the overlap portion S2 is displayed on the display unit 31, when the prototype container 14 is formed into a predetermined shape to thereby complete the packaging container 15, a user can judge from the position of the overlap portion S2 whether or not forming has been performed properly. Thus, sampling the packaging container 15 from a production line becomes unnecessary, thereby simplifying the work of judging whether or not forming has been performed properly, and thus reducing the cost of production of the packaging container 15. Also, all the packaging containers 15 can be checked so as to see whether or not they have been formed properly.

In order to detect the overlap portion S2, mere digitization of a sensor output from the CCD 23 suffices, without need to process data regarding a taken image, thereby reducing the cost of manufacture of the filling apparatus. Since detection of the overlap portion S2 does not require employment of a contactor to be brought in direct contact with the packaging material 11, the overlap portion S2 can be detected at high accuracy.

The detection data generated by the overlap portion detection processing means 28 is sent to the centering processing means 43 in real time. The centering processing means 43 calculates the deviation of the position of the overlap portion S2 detected by the overlap portion detection processing means 28 from a predetermined position of the overlap portion S2 stored in the control unit 29 and performs feedback control on the basis of the deviation to thereby drive the motor 74 accordingly. As a result, the position of one end of the first guide roller 34 is modified to thereby bring the overlap portion S2 to the predetermined position. In this case, wasteful consumption of the packaging material 11 can be avoided.

Next, a guide roller support mechanism for moving one end of the first guide roller 34 will be described.

FIG. 10 is a front view showing a guide roller support mechanism in the first embodiment of the present invention; FIG. 11 is a plan view showing the guide roller support mechanism in the first embodiment of the present invention; and FIG. 12 is a side view showing the guide roller support mechanism in the first embodiment of the present invention. For convenience of explanation, the direction of arrow B in FIG. 10 is the vertical direction of the guide roller support mechanism.

As illustrated, the first guide roller 34 includes a cylindrical member 51 and a pair of bosses 52 disposed on the inner surface of the cylindrical member 51 in the vicinity of opposite ends of the cylindrical member 51. A shaft 53 is disposed in order to rotatably support the first guide roller 34. Bearings B1 are disposed at opposite ends of the shaft 53. The bosses 52 are fitted onto the corresponding bearings B1.

The guide roller support mechanism includes a support mechanism 56 for movably supporting one end of the first guide roller 34; a drive mechanism 57 for moving one end of the first guide roller 34; and a fulcrum mechanism 58 for pivotably supporting the other end of the first guide roller 34. In the guide roller support mechanism, one end of the first guide roller 34 can be moved in the direction of arrow B. Notably, the forming ring 37 (FIG. 6), the first guide roller 34, the support mechanism 56, the drive mechanism 57, the fulcrum mechanism 58 and other components constitute a centering apparatus for the packaging material tube 41.

The support mechanism 56 includes a flange 81 fixed on the aseptic room 30; a center shaft 82 disposed vertically movably with respect to the flange 81; a seal plate 83 mounted on the center shaft 82, disposed in such a manner as to be slidable on the flange 81, and adapted to maintain airtightness within the aseptic room 30; a cylindrical joint collar 84 fitted onto one end of the center shaft 82; a slider 85 attached to one end of the center shaft 82 via the joint collar 84; and slide guides 86 disposed at opposite edges of the slider 85 so as to guide the slider 85 along the vertical direction.

The other end of the center shaft 82 is formed into a large-diameter portion 88. A cavity 89 is formed in the large-diameter portion 88. A ball bearing 91 is disposed within the cavity 89. One end of the shaft 53 is pivotably supported by the center shaft 82 by means of the ball bearing 91. A through-hole 81a is formed in the flange 81 for allowing the center shaft 82 to extend therethrough such that, as the slider 85 moves vertically, the center shaft 82 can move vertically. The inside diameter of the through-hole 81a is greater than the diameter of a central portion of the center shaft 82.

The drive mechanism 57 includes a first plate 71 mounted on the upper end of the flange 81; a second plate 73 mounted on the first plate 71 via a spacer 72; a motor 74 mounted on the second plate 73; a speed reducer 75 for reducing the speed of rotation effected by the motor 74; and a ball screw 76 serving as motion direction conversion means for converting a rotational motion, whose rotational speed has been reduced by the speed reducer 75, to a linear motion. The speed reducer 75 includes a first gear g1 of small diameter attached to an output shaft 74a of the motor 74 and a second gear g2 of large diameter attached to a shaft 77, which is disposed rotatably with respect to the second plate 73. The shaft 77 is supported by a bearing B2 disposed within a bearing case 78, which is mounted on the second plate 73 by use of bolts b3.

The ball screw 76 includes a ball screw shaft portion 79 formed at a lower half portion of the shaft 77 and a ball nut 80, which is screw-engaged with the ball screw shaft portion 79 and fixed on the upper end of the slider 85.

The fulcrum mechanism 58 includes a bracket 61 mounted on the aseptic room 30; a support block 62 attached to the bracket 61 by use of bolts b1 and b2; and a pin 63 disposed in such a manner as to extend through the support block 62 and operative as the center of a pivotal motion of the first guide roller 34. The pin 63 pivotably supports a protrusion 54 formed on the other end of the shaft 53.

Next, the operation of the guide roller support mechanism will be described.

When the motor 74 is operated, the output shaft 74a is rotated. Rotation of the output shaft 74a is transmitted to the shaft 77 after being reduced in speed by the speed reducer 75. As the shaft 77 is rotated, the ball nut 80 is moved vertically, causing the slider 85 to move vertically along the slide guides 86. Accordingly, the center shaft 82 is caused to move vertically, thereby moving one end of the first guide roller 34 in the direction of arrow B.

In this case, while being guided by the first guide roller 34, the packaging material 11 is caused to move axially on the surface of the first guide roller 34 by an amount corresponding to an amount of movement of the center shaft 82. That is, the packaging material 11 can be moved perpendicular to its transport direction. Since opposite edges of the packaging material 11 to be curved by means of the forming ring 37 vary in position, the overlap portion S2 moves accordingly to thereby be adjusted in position.

In this case, since the position of the overlap portion S2 is thus adjusted, there is no need to press an unillustrated paper guide against an edge portion of the packaging material 11, whereby potential damage to an edge portion of the packaging material 11 is avoided.

Next, a second embodiment of the present invention will be described. Structural features similar to those of the first embodiment are denoted by common reference numerals, and repeated description thereof is omitted.

FIG. 13 is a front view showing a guide roller support mechanism in the second embodiment of the present invention; FIG. 14 is a plan view showing the guide roller support mechanism in the second embodiment of the present invention; and FIG. 15 is a side view showing the guide roller support mechanism in the second embodiment of the present invention. For convenience of explanation, the direction of arrow B in FIG. 13 is the vertical direction of the guide roller support mechanism.

As illustrated, a shaft 153 is disposed in order to rotatably support a first guide roller 134. The guide roller support mechanism includes a support mechanism 156 for supporting one end of the first guide roller 134; a drive mechanism 157 for moving one end of the first guide roller 134; and a fulcrum mechanism 158 for pivotably supporting the other end of the first guide roller 134. In the guide roller support mechanism, one end of the first guide roller 134 can be moved in the direction of arrow B.

The support mechanism 156 includes a flange 181 fixed on the aseptic room 30; a center shaft 182 disposed vertically movably with respect to the flange 181; a seal plate 183 mounted on the center shaft 182, disposed in such a manner as to be slidable on the flange 181, and adapted to maintain airtightness within the aseptic room 30; a slider 185 attached to one end of the center shaft 182; and slide guides 186 disposed at opposite edges of the slider 185 so as to guide the slider 185 along the vertical direction.

The other end of the center shaft 182 is formed into a large-diameter portion 188. A cavity 189.is formed in the large-diameter portion 188. A ball bearing 191 is removably disposed within the cavity 189. One end of the shaft 153 is pivotably supported by the center shaft 182 by means of the ball bearing 191. A through-hole 181a is formed in the flange 181 for allowing the center shaft 182 to extend therethrough such that, as the slider 185 moves vertically, the center shaft 182 can move vertically. The inside diameter of the through-hole 181a is greater than the diameter of a central portion of the center shaft 182.

The drive mechanism 157 includes a plate 171 mounted on the lower end of the flange 181; a motor 74 mounted on the plate 171 and serving as drive means; a speed reducer 75 for reducing the speed of rotation effected by the motor 74; and a ball screw 76 serving as motion direction conversion means for converting a rotational motion, whose rotational speed has been reduced by the speed reducer 75, to a linear motion. The speed reducer 75 includes a first gear g1 of small diameter attached to an output shaft 74a of the motor 74 and a second gear g2 of large diameter attached to a shaft 177, which is disposed rotatably with respect to the plate 171. The shaft 177 is supported by a bearing B2 disposed within a bearing case 178.

The ball screw 76 includes a ball screw shaft portion 179 formed at an upper half portion of the shaft 177 and a ball nut 180, which is screw-engaged with the ball screw shaft portion 179 and formed integrally at the lower end of the slider 185.

The fulcrum mechanism 158 includes a support block 162 mounted on the aseptic room 30; a pin 163 disposed in such a manner as to extend through the support block 162; a connection member 211 pivotably supported by the support block 162 via the pin 163; and a pin 212 disposed in such a manner as to extend through the connection member 211 and operative as the center of a pivotal motion of the first guide roller 134. The pin 212 pivotably supports a protrusion 154 formed on the other end of the shaft 153.

The thus-configured guide roller support mechanism operates in the following manner. When the motor 74 is operated, the output shaft 74a is rotated. Rotation of the output shaft 74a is transmitted to the shaft 177 after being reduced in speed by the speed reducer 75. As the shaft 177 is rotated, the ball nut 180 is moved vertically, causing the slider 185 to move vertically along the slide guides 186. Accordingly, the center shaft 182 is caused to move vertically, thereby moving one end of the first guide roller 134 in the direction of arrow B.

In order to simplify the work of loading the filling apparatus with the packaging material 11 (FIG. 6), the first guide roller 134 can be pivoted about the pin 163 as illustrated by the dot-and-dash line of FIG. 14. Specifically, a predetermined arcuate part 188a of the large-diameter portion 188 can be opened/closed by means of an unillustrated hinge. After the arcuate part 188a is opened, the ball bearing 191 can be detached from or attached to the large-diameter portion 188.

A spring 215 is disposed between the seal plate 183 and the slider 185 and biases the slider 185 away from the seal plate 183.

The packaging material 11 is formed through longitudinally cutting an unillustrated wide original web at a plurality of positions. When variations in the distance α (see FIG. 5) arise due to positional cutting error, even the positional adjustment of the overlap portion S2 fails to establish the positional coincidence between the creases m1 and m2 (see FIG. 3) formed beforehand on the packaging material 11 and the actual creases n1 and n2.

Next will be described a third embodiment of the present invention configured to cope with the above-described problem.' The third embodiment is configured such that among creases m11-m14 formed beforehand on the packaging material 11, the predetermined crease m11 is detected and on the basis of the detected position of the crease m11, detection data is corrected. Structural features similar to those of the first embodiment are denoted by common reference numerals, and repeated description thereof is omitted.

FIG. 16 is a conceptual diagram of a filling apparatus according to the third embodiment of the present invention; and FIG. 17 is a control block diagram of an overlap portion adjustment apparatus in the third embodiment of the present invention.

In FIGS. 16 and 17, reference numeral 11 denotes a packaging material. The packaging material 11 is formed through longitudinally cutting an unillustrated wide original web at a plurality of positions. The creases m1, m2, and m11-m14 (see FIG. 4) are formed beforehand on the packaging material 11.

The packaging material 11 is fed into the aseptic room 30 by means of an unillustrated feeder while being guided by rollers R1-R5. After being fed into the aseptic room 30, the packaging material 11 is transported while being guided by the rollers R6 and R7, and is then transported upward as indicated by arrow C. Subsequently, the packaging material 11 is transported while being guided by a feed roller 32 and is then transported obliquely upward to an air knife unit 33. Subsequently, the packaging material 11 is transported obliquely upward as indicated by arrow B within the air knife unit 33. In the course of transport within the air knife unit 33, hot air discharged from unillustrated nozzles removes a germicide and the like adhering to the packaging material 11.

The packaging material 11 exiting from the air knife unit 33 is sent to a first guide roller 34. Being guided by the first guide roller 34, the packaging material 11 is transported downward, as indicated by arrow D, to a second guide roller 35. Being guided by the second guide roller 35, the packaging material 11 is transported obliquely upward to a third guide roller 36. Being guided by the third guide roller 36, the packaging material 11 is transported downward. While being guided by a forming ring 37 (FIG. 6) and other components, which collectively serve as the packaging material tube formation means, the packaging material 11 is gradually curved into the shape of a tube. An unillustrated longitudinal sealing apparatus longitudinally seals the tubular portion of the packaging material 11 into a packaging material tube 41.

Subsequently, the packaging material tube 41 exits from the aseptic room 30 and is transported to an unillustrated lateral sealing apparatus. In the lateral sealing apparatus, while being nipped from both sides, the packaging material tube 41 is laterally sealed at predetermined intervals, whereby lateral seal portions S1 (see FIG. 1) are formed. Subsequently, an unillustrated cutting apparatus cuts the packaging material tube 41 at the lateral seal portions S1, thereby separating prototype containers 14 each assuming the form of, for example, a pillow or a bag, from one another. An unillustrated forming apparatus forms each of the prototype containers 14 into a predetermined shape through bending along the creases m1, m2, and m11-m14 formed beforehand, thereby completing a packaging container 15.

A CCD 23 serving as the light detection means is disposed outside the aseptic room 30 in the vicinity of an outlet for the packaging material tube 41 in such a manner as to face the packaging material tube 41. On the basis of a sensor output from the CCD 23, the overlap portion S2 is detected. On the basis of the result of detection of the overlap portion S2; i.e., on the basis of first detection data, one end of the first guide roller 34 is moved in the direction of arrow B; i.e., in the transport direction of the packaging material 11 in the air knife unit 33, so as to move the overlap portion S2 to a predetermined position.

That is, the direction (the direction of arrow B) along which one end of the first guide roller 34 is moved is a direction parallel with a transport plane of the packaging material 11 which is about to reach the first guide roller 34 after transport along a path extending between the feed roller 32 and the first guide roller 34.

In this case, while being guided by the first guide roller 34, the packaging material 11 is caused to move axially on the surface of the first guide roller 34 by an amount corresponding to an amount by which one end of the first guide roller 34 is moved. That is, the packaging material 11 can be moved perpendicular to its transport direction. Since edge portions 11a and 11b of the packaging material 11 to be curved by means of the forming ring 37 vary in position, the overlap portion S2 moves accordingly to thereby be adjusted in position; i.e., the overlap portion S2 can be moved to a predetermined position.

As a result, when the prototype container 14 is formed into the final packaging container 15, a positional coincidence is established between the creases m1 and m2 formed beforehand on the packaging material 11 and the actual creases n1 and n2 to thereby improve the appearance of the packaging container 15.

The positional adjustment of the overlap portion S2 does not involve pressing of unillustrated paper guides against the edge portions 11a and 11b of the packaging material 11, whereby potential damage to the edge portions 11a and 11b of the packaging material 11 is avoided.

Since the direction along which one end of the first guide roller 34 is moved is a direction parallel with a transport plane of the packaging material 11 which is about to reach the first guide roller 34, the positional adjustment of the overlap portion S2 to a predetermined position does not involve a great change in the transport state of the packaging material 11.

Next will be described a mechanism for correcting the position of the overlap portion S2 of the packaging material tube 41 through moving one end of the first guide roller 34.

Reference numeral 24 denotes a first image processor. The first image processor 24 includes a CCD drive circuit 26 and a digitizer 27. The CCD drive circuit 26 drives the CCD 23. A sensor output from the CCD 23 is sent to the digitizer 27 via the CCD drive circuit 26 and digitized at the digitizer 27. In the present embodiment, a comparator can be used as the digitizer 27. The comparator compares the sensor output with a predetermined reference value and outputs 1 or 0. An output from the digitizer 27 is sent to a control unit 16.

The control unit 16 includes overlap portion detection processing means 28; centering processing means 43; crease detection processing means 128; distance calculation processing means 129; and correction value calculation processing means 130. Upon reception of an output from the digitizer 27, the overlap portion detection processing means 28 detects a peak in the sensor output on the basis of the digitizer output to thereby detect the overlap portion S2. The overlap portion detection processing means 28 sends first detection data as a detection signal to a display unit 31, such as a display. The display unit 31 displays the position of the overlap portion S2 on the basis of the first detection data.

The first detection data is sent to the centering processing means 43. On the basis of the first detection data, the centering processing means 43 drives the motor 74 to thereby move one end of the first guide roller 34.

The packaging material 11 is formed through longitudinally cutting an unillustrated wide original web at a plurality of positions. When variations in the distance α arise due to positional cutting error, even the positional adjustment of the overlap portion S2 fails to establish the positional coincidence between the creases m1 and m2 formed beforehand on the packaging material 11 and the actual creases n1 and n2.

In order to cope with the above-described problem, among the creases m11-m14 formed beforehand on the packaging material 11, the predetermined crease m11 is detected and on the basis of the detected position of the crease m11, the first detection data is corrected.

In order to carry out the above-described correction, a light source 121 is disposed a predetermined distance away from the packaging material 11 in such a manner as to face the packaging material 11. The light source 121 irradiates, with light, a portion of the surface of the packaging material 11 which includes at least the crease m11. Reference numeral 122 denotes a lens serving as a condensing member and disposed in opposition to the crease m11. The lens 122 gathers light emitted from the light source 121 and reflected from the surface of the packaging material 11.

Reference numeral 123 denotes a CCD. The CCD 123 is disposed between the rollers R3 and R4 in opposition to the packaging material 11 as well as on the optical axis of the lens 122. The CCD 123 receives light gathered by the lens 122 and issues a sensor output. The CCD 123 may be a one-dimensional line sensor or a two-dimensional plane sensor. The lens 122 and the CCD 123 constitute second image pickup means.

Reference numeral 124 denotes a second image processor. The second image processor 124 includes a CCD drive circuit 126 and a digitizer 127. The CCD drive circuit 126 drives the CCD 123. A sensor output from the CCD 123 is sent to the digitizer 127 via the CCD drive circuit 126 and digitized at the digitizer 127. In the present embodiment, a comparator can be used as the digitizer 127. The comparator compares the sensor output with a predetermined reference value and outputs 1 or 0. An output from the digitizer 127 is sent to the control unit 16.

Upon reception of an output from the digitizer 127, the crease detection processing means 128 detects the crease m11 on the basis of the output. The crease detection processing means 128 sends, as a detection signal, second detection data indicative of the detection of the crease m11 to the distance calculation processing means 129. On the basis of the second detection data, the distance calculation processing means 129 calculates the distance α between the edge portion 11a of the packaging material 11 and the crease m11 and sends the calculated distance α to the correction value calculation processing means 130. The correction value calculation processing means 130 calculates a correction value on the basis of the distance α and sends the calculated correction value to the centering processing means 43.

On the basis of the correction value, the centering processing means 43 corrects the first detection data. On the basis of the corrected first detection data, the centering processing means 43 drives the motor 74 to thereby move one end of the first guide roller 34. Accordingly, even when variations in the distance α arise due to positional cutting error, the position of the overlap portion S2 is adjusted on the basis of the corrected first detection data such that the overlap portion S2 is brought to a predetermined position, so that the positional coincidence between the creases m1 and m2 formed beforehand on the packaging material 11 and the actual creases n1 and n2.

When the overlap portion S2 is positionally adjusted on the basis of the first detection data which is corrected on the basis of the correction value, the actual position of the overlap portion S2 is moved circularly slightly in the direction of arrow A1 or A2. However, a part of the overlap portion S2 at which the packaging material 11 is sealed longitudinally does not vary greatly in position. Thus, sealing performance is not impaired at the overlap portion S2.

According to the present embodiment, the first detection data is corrected on the basis of the second detection data. However, two modes may be provided for selection: in one mode, the position of the overlap portion S2 is adjusted merely on the basis of the first detection data; and in the other mode, the first detection data is corrected on the basis of the second detection data, and on the basis of the corrected first detection data, the position of the overlap portion S2 is adjusted.

In other words, the overlap portion S2 can be adjusted on the basis of the first detection data; i.e., on the edge basis, or on the basis of the corrected first detection data; i.e., on the crease basis. In order to select a mode, an unillustrated mode selector switch may be disposed.

In a filling apparatus which attaches importance to forming performance, creases m11-m14 on the packaging material 11 must be positionally constant. In a filling apparatus which attaches importance to sealing performance, the overlap portion S2 must be positionally constant. Accordingly, In a filling apparatus which attaches importance to forming performance, the overlap portion S2 is adjusted on the crease basis. In a filling apparatus which attaches importance to sealing performance, the overlap portion S2 is adjusted on the edge basis.

According to the present embodiment, the overlap portion S2 is detected on the basis of a sensor output from the CCD 23; the crease m11 is detected on the basis of a sensor output from the CCD 123; and the CCDs 23 and 123 are disposed away from each other. Variations in the distance α stemming from such a positional difference between the CCDs 23 and 123 is negligible. That is, the period of variation in the distance α is very large as compared with the distance between the CCDs 23 and 123 as measured along the transport direction of the packaging material 11 and that as measured along the transport direction of the packaging material tube 41.

The present invention is not limited to the above-described embodiments. Numerous modifications and variations of the present invention are possible within the scope of the claims.

### INDUSTRIAL APPLICABILITY

The present invention is applicable to a filling apparatus for filling a packaging container formed of a packaging material with liquid food.

## Claims

1. A filling apparatus, comprising:
(a) a light source (21) for irradiating, with light, a portion of an outer circumferential surface of a packaging material tube (41) having an overlap portion (S2), the portion including at least the overlap portion (S2);
(b) light detection means (20) for issuing a sensor output upon reception of light emitted from said light source (21) and reflected from the outer circumferential surface of the packaging material tube (41); and
(c) overlap portion detection processing means (28) for detecting the overlap portion (S2) by means of the sensor output;
said filling apparatus being **characterized in that**:
(d) the light source (21) is disposed on a tangent to the packaging material tube (41) at the overlap portion (S2) in such a manner as to face an end face (18) of the overlap portion (S2); and
(e) the overlap portion detection processing means (28) detects the overlap portion (S2) by means of a peak in the sensor output, of which emergence is caused by difference between an intensity of the light reflected from the end face (18) of the overlap portion (S2) and an intensity of the light reflected from other portion.

2. A filling apparatus according to claim 1, wherein said light detection means (20) is disposed radially outward from an end part of the overlap portion.

3. A filling apparatus according to claim 1or 2, further comprising a display unit (31) for displaying a position of the overlap portion (S2).

## Patentansprüche

1. Füllvorrichtung, umfassend:
(a) eine Lichtquelle (21) zum Bestrahlen eines Abschnitts einer äußeren Umfangsfläche eines Verpackungsmaterialschlauchs (41) mit einem Überlappungsabschnitt (S2) mit Licht, wobei der Abschnitt wenigstens den Überlappungsabschnitt (S2) enthält,
(b) Lichterkennungsmittel (20) zum Ausgeben eines Sensoroutputs bzw. einer -ausgabe beim Empfang von Licht, das von der Lichtquelle (21) ausgesendet und von der äußeren Umfangsfläche des Verpackungsmaterialschlauchs (41) reflektiert wird, und
(c) Überlappungsabschnittserkennungsverarbeitungsmittel (28) zum Erkennen des Überlappungsabschnitts (S2) mithilfe des Sensoroutputs,
wobei die Füllvorrichtung **dadurch gekennzeichnet ist, dass**:
(d) die Lichtquelle (21) auf einer Tangente zum Verpackungsmaterialschlauch (41) am Überlappungsabschnitt (S2) derart angeordnet ist, dass sie einer Stirn- bzw. Endfläche (18) des Überlappungsabschnitts (S2) zugewandt ist, und
(e) die Überlappungsabschnittserkennungsverarbeitungsmittel (28) den Überlappungsabschnitt (S2) mithilfe einer Spitze im Sensoroutput erkennen, deren Austritt bzw. Erscheinen durch Differenz zwischen einer Intensität des von der Endfläche (18) des Überlappungsabschnitts (S2) reflektierten Lichts und einer Intensität des von einem anderen Abschnitt reflektierten Lichts bewirkt wird.

2. Füllvorrichtung nach Anspruch 1, wobei die Lichterkennungsmittel (20) radial außerhalb eines Endteils des Überlappungsabschnitts angeordnet sind.

3. Füllvorrichtung nach Anspruch 1 oder 2, ferner umfassend eine Anzeigeeinheit (31) zum Anzeigen einer Position des Überlappungsabschnitts (S2).

## Revendications

1. Appareil de remplissage, comprenant :
(a) une source de lumière (21) pour irradier, à l'aide de lumière, une partie de la surface circonférentielle externe d'un tube de matériau d'emballage (41) comportant une section de chevauchement (S2), la partie incluant au moins la section de chevauchement (S2) ;
(b) des moyens de détection de lumière (20) servant à produire une sortie de capteur au moment de la réception de la lumière émise à partir de ladite source de lumière (21) et réfléchie depuis la surface circonférentielle externe du tube de matériau d'emballage (41) ; et
(c) des moyens de traitement (28) de la détection de la section de chevauchement pour détecter la section de chevauchement (S2) grâce à la sortie du capteur ;
ledit appareil de remplissage étant **caractérisé en ce que** :
(d) la source de lumière (21) est disposée sur une ligne tangente par rapport au tube de matériau d'emballage (41) au niveau de la section de chevauchement (S2) de sorte à faire face à une face d'extrémité (18) de la section de chevauchement (S2) ; et
(e) les moyens de traitement (28) de la détection de la section de chevauchement détectent la section de chevauchement (S2) grâce à la présence d'une crête dans la sortie de capteur, crête dont l'apparition est causée par la différence entre l'intensité de la lumière qui est réfléchie depuis la face d'extrémité (18) de la section de chevauchement (S2) et l'intensité de la lumière qui est réfléchie depuis une autre partie.

2. Appareil de remplissage selon la revendication 1, lesdits moyens de détection de lumière (20) étant disposés dans le plan radial vers l'extérieur à partir d'une partie d'extrémité de la section de chevauchement.

3. Appareil de remplissage selon la revendication 1 ou 2, comprenant en outre une unité d'affichage (31) destinée à afficher une position de la section de chevauchement (S2).
